# EUROPÄISCHE PATENTSCHRIFT

(11) **EP 4 662 110 B1**
(45) Veröffentlichungstag und Bekanntmachung des Hinweises auf die Patenterteilung: **02.12.2026**
(21) Anmeldenummer: 24700585.3
(22) Anmeldetag: 11.01.2024
(51) Int. Cl.: B62J 50/21

(54) **VERSTELLHALTER FÜR EIN KOMBIINSTRUMENT SOWIE KRAFTFAHRZEUG**
ADJUSTABLE HOLDER FOR A COMBINED INSTRUMENT AND MOTOR VEHICLE
SUPPORT RÉGLABLE POUR UN INSTRUMENT COMBINÉ ET VÉHICULE À MOTEUR

(30) Priorität: 08.02.2023 DE 102023103057
(43) Veröffentlichungstag der Anmeldung: 17.12.2025
(73) Patentinhaber: Bayerische Motoren Werke Aktiengesellschaft, 80809 München (DE)
(72) Erfinder: HOJDA, Jan, 58762 Altena (DE); HAHN, Sarah, 85567 Grafing bei München (DE)
(86) Internationale Anmeldenummer: PCT/EP2024/050566
(87) Internationale Veröffentlichungsnummer: WO 2024/165261

(56) Entgegenhaltungen:
- JP-A- S62 261 549
- US-B1- 6 641 196

## Beschreibung

Die vorliegende Erfindung betrifft einen Verstellhalter für ein Instrument, insbesondere beispielsweise für ein Kombiinstrument eines Kraftrads, wie eines Motorrads, sowie ein Kraftfahrzeug.

Krafträder, wie beispielsweise Motorräder, weisen, typischerweise im Bereich des Lenkers, ein oder mehrere Instrumente oder Anzeigen auf, wie beispielsweise einen Tachometer, einen Kilometerzähler, eine Tankanzeige, Kontrollleuchten etc. Diese sind, abhängig von der Sonneneinstrahlung und/oder auch der Größe des Fahrers, unter Umständen nicht immer gut ablesbar. Die JP 622 615 49 A2 offenbart in diesem Zusammenhang beispielsweise eine Verstelleinrichtung für ein Kombiinstrument, welches mit ein oder mehreren Drehgelenken arbeitet. Die Lösung ist konstruktiv eher aufwendig und bietet hinsichtlich der möglichen Verstellmöglichkeiten eher wenige Freiheitsgrade. Zudem ist der Platzbedarf hoch.

Die JP S62 261549 A betrifft ein Kombiinstrument eines Motorrads, welches in seiner Neigung verstellt werden kann.

Die US 6,641,196 B1 betrifft eine Verstelleinrichtung für ein Windschild eines Motorrads.

Es ist daher eine Aufgabe der vorliegenden Erfindung, einen Verstellhalter sowie ein Kraftfahrzeug anzugeben, wobei ein einfaches und robustes System angegeben werden soll, welches einen großen Verstellbereich bei gleichzeitig geringem Platzbedarf bietet.

Diese Aufgabe wird durch einen Verstellhalter gemäß Anspruch 1 sowie durch ein Kraftfahrzeug gemäß Anspruch 9 gelöst. Weitere Vorteile und Merkmale ergeben sich aus den Unteransprüchen sowie der Beschreibung und den beigefügten Figuren.

Erfindungsgemäß umfasst ein Verstellhalter für ein Instrument, insbesondere für ein Kombiinstrument eines Kraftrads, eine Betätigungseinrichtung sowie einen Instrumentenhalter, wobei die Betätigungseinrichtung ausgelegt ist, eine entlang einer Längsachse gerichtete Verstellkraft auf den Instrumentenhalter aufzubringen, wodurch der Instrumentenhalter bewegt wird oder bewegt werden kann, und wobei der Instrumentenhalter derart verschieblich gelagert ist, dass er beim Bewegen neben einer Translationsbewegung eine Rotationsbewegung durchführt oder durchführen kann. Ein Instrument kann beispielsweise ein Drehzahlmesser oder ein Kilometerzähler sein. Ein Instrument kann auch als ein Display verstanden werden, über welches Informationen angezeigt werden. Gemäß einer bevorzugten Ausführungsform ist das Instrument insbesondere ein sogenanntes Kombiinstrument. Hierbei handelt es sich um eine Komponente, in welcher verschiedenste Funktionalitäten und Funktionen vereint sind, wie beispielsweise: Tachometer, Kilometerzähler, Drehzahlmesser, Tankanzeige, diverse Kontrollleuchten, Navigationssystem etc. Zweckmäßigerweise kann vorliegend über die verschiebliche Lagerung des Instrumentenhalters ein großer Verstellbereich realisiert werden, insbesondere ein Verstellbereich, bei welchem eine Rotationsbewegung und eine Translationsbewegung überlagert sind. Zweckmäßigerweise kann also nicht nur der Abstand des Instrumentenhalters zum Fahrer verändert werden, sondern auch die Neigung. Zweckmäßigerweise kann dies in einem Bewegungsschritt erfolgen, wobei hierzu die Betätigungseinrichtung vorgesehen ist. Die verschiebliche Lagerung bietet außerdem den Vorteil, dass der Platzbedarf beim Bewegen oder Verstellen deutlich geringer ist als bei einer reinen Dreh- oder Schwenkbewegung um eine starre Drehachse.

Zweckmäßigerweise kann über die Betätigungsrichtung die Verstellkraft auf den Instrumentenhalter aufgebracht werden, wobei die Verstellkraft entlang der Längsachse in zwei Richtungen wirken kann, einmal zum Instrumentenhalter hin, und einmal von diesem Weg. Der Instrumentenhalter kann also über die Betätigungseinrichtung bevorzugt vor und zurück verstellt werden.

Gemäß einer Ausführungsform weist die Betätigungseinrichtung ein Betätigungselement und ein in dem Instrumentenhalter angeordnetes Übertragungselement auf, wobei das Betätigungselement bevorzugt entlang der Längsachse lagefixiert und um die Längsachse drehbar gelagert ist, und wobei das Übertragungselement und das Betätigungselement derart zusammenwirken, dass eine Drehbewegung des Betätigungselements in eine entlang der Längsachse gerichtete Linearbewegung des Übertragungselements zum Aufbringen oder Übertragen der Verstellkraft auf den Instrumentenhalter umgewandelt werden kann. Bevorzugt ist das Übertragungselement drehbar in dem Instrumentenhalter angeordnet. Hierzu ist gemäß einer Ausführungsform beispielsweise ein erstes Halteelement vorgesehen, welches als Stab oder Stange ausgebildet ist, die in dem Instrumentenhalter form- und/oder kraftschlüssig oder und/auch stoffschlüssig angeordnet ist. Um diese Stange herum kann sich das Übertragungselement beispielsweise drehen. Alternativ kann sich auch der vorgenannte Stab oder die Stange im Instrumentenhalter drehen. Die Verwendung des drehbaren Betätigungselements ermöglicht mit Vorteil eine gut umsetzbare mechanische Lösung. So ist an dem Betätigungselement beispielsweise ein Drehgriff ausgebildet, über welchen das Betätigungselement gedreht werden kann. Die Umwandlung der Drehbewegung in die Linearbewegung ermöglicht dabei weiterhin eine sehr feinfühlige und vor allem auch stufenlose Verstellung des Instrumentenhalters. Je nach Ausgestaltung des Betätigungselements kann mit Vorteil auf eine Arretierungsfunktion oder dergleichen verzichtet werden.

Gemäß einer Ausführungsform umfasst das Betätigungselement ein Gewinde oder eine Gewindespindel. Das Gewinde oder die Gewindespindel wirkt zweckmäßigerweise mit einem entsprechend ausgebildeten Übertragungselement zusammen. Über die wirkende Selbsthemmung kann der Instrumentenhalter in den verschiedensten Positionen arretiert werden, ohne dass hierzu weitere Vorkehrungen getroffen werden müssen. Abhängig von der gewählten Steigung des Gewindes oder der Gewindespindel ist zudem eine sehr schnelle und robuste Verstellmöglichkeit gegeben.

Gemäß einer Ausführungsform ist der Instrumentenhalter über zwei Lagerstellen gelagert, wobei die Lagerstellen durch Eingriffsabschnitte gebildet sind, welche verschieblich in entsprechend ausgebildeten Ausnehmungen gelagert sind oder dort eingreifen. Die Eingriffsabschnitte sind als Vorsprünge zu verstehen, welche in entsprechend ausgebildete Rücksprünge - die Ausnehmungen - eingreifen. Die Eingriffsabschnitte sind gemäß einer bevorzugten Ausführungsform im Querschnitt rund, insbesondere kreisrund, ausgebildet. Bei den Ausnehmungen handelt es sich beispielsweise um Materialrücksprünge oder entsprechend ausgebildete Löcher, in welche die vorgenannten Eingriffsabschnitte eingreifen. Die Ausnehmungen sind hierbei zur Realisierung der "Verschieblichkeit" länglich ausgebildet. Mit anderen Worten weisen die Ausnehmungen gemäß einer Ausführungsform die Form eines Langlochs auf, wobei sich entlang des Langlochs die Eingriffsabschnitte bewegen können. Abhängig von der Orientierung der Ausnehmungen bzw. deren Gestaltung, beispielsweise gerade oder gebogen etc., können unterschiedliche Bewegungsmuster realisiert werden.

Gemäß einer bevorzugten Ausführungsform sind das erste Halteelement sowie die ersten Eingriffsabschnitte auf einer Achse, mit anderen Worten, konzentrisch zueinander angeordnet.

Gemäß einer Ausführungsform weist die erste Lagerstelle zwei entlang der Längsachse orientierte erste Ausnehmungen auf, und wobei eine zweite Lagerstelle zwei zweite Ausnehmungen aufweist, welche unterschiedlich dazu orientiert sind. Bei dieser Ausführungsform sind die Ausnehmungen bevorzugt als gerade oder im Wesentlichen gerade Langlöcher ausgebildet. Die Eingriffsabschnitte weisen im Querschnitt einen runden, insbesondere kreisrunden, Querschnitt auf und sind in den Ausnehmungen entsprechend geführt. Über die unterschiedlich orientierten Ausnehmungen kann insbesondere das bevorzugte Bewegungsprofil, umfassend eine Translationsbewegung, welche einer Rotationsbewegung überlagert ist, realisiert werden.

Gemäß einer Ausführungsform ist der Instrumentenhalter in seitlich angeordneten Lagerelementen gelagert, wobei die Lagerelemente die Ausnehmungen aufweisen. Gemäß einer Ausführungsform ist der Verstellhalter mittelbar über die Lagerelemente an einem Fahrzeug, insbesondere in einem Cockpit oder Cockpitbereich eines Fahrzeugs, insbesondere eines Kraftrads, wie eines Motorrads, befestigbar. Gemäß einer Ausführungsform sind die Lagerelemente über ein Zwischenelement verbunden, wobei dieses gemäß einer Ausführungsform zur Lagerung des Betätigungselements verwendet wird. Das bevorzugt als Gewindespindel ausgebildete Betätigungselement ist drehbar in dem Zwischenelement gelagert. Die Lagerung ist dabei bevorzugt derart gestaltet, dass das Betätigungselement entlang der Längsachse lagefixiert ist. Beim Drehen des Betätigungselements bewegt sich das mit diesem zusammenwirkende Übertragungselement entlang der Längsachse in die eine oder andere Richtung, abhängig von der eingeleiteten Drehbewegung. Hierüber wird der Instrumentenhalter bewegt/verstellt.

Gemäß einer Ausführungsform umfasst der Verstellhalter ein Federelement, welches derart am Instrumentenhalter angeordnet ist oder dort angreift, dass ein Bewegen des Instrumentenhalters unterstützt werden kann. Gemäß einer Ausführungsform ist das Federelement eine Zugfeder, welche zwischen einem die Lagerelemente verbindenden Hilfselement und dem Instrumentenhalter angeordnet ist. Beim Verfahren des Instrumentenhalters in die eine Richtung (vom Fahrer weg), wird das Federelement gespannt, wodurch beim Zurückverfahren über das Federelement eine unterstützende Kraft aufgebracht werden kann. Gemäß einer Ausführungsform ist die Zugfeder also derart positioniert, dass die Zugfeder vorgespannt wird, wenn der Instrumentenhalter vom Fahrer weg bewegt wird. Alternativ ist das Federelement, ausgebildet als Zugfeder, derart angeordnet, dass das Weg-Verstellen durch die Federkraft unterstützt wird. Alternativ oder zusätzlich kann auch mit einer oder mehreren Druckfedern gearbeitet werden, welche entsprechend angeordnet sind. Gemäß einer Ausführungsform umfasst der Instrumentenhalter einen ersten Bereich und einen zweiten Bereich, wobei die Bereiche in einem Winkel zueinander angeordnet sind, und wobei der zweite Bereich zum Halten eines Instruments, wie eines Kombiinstruments, ausgelegt ist. Während der erste Bereich im eingebauten Zustand des Verstellhalters beispielsweise eben oder im Wesentlichen eben zur Fahrbahnebene orientiert ist, ist der zweite Bereich bevorzugt zum Fahrer hin orientiert. Typische Winkelbereiche liegen bevorzugt in einem Bereich von 110° bis 150°, insbesondere in einem Bereich von 100° bis 130°.

Die Erfindung richtet sich auch auf ein Kraftfahrzeug, insbesondere ein Kraftrad, umfassend einen Verstellhalter nach einem der vorhergehenden Ansprüche. Unter einem Kraftrad werden vorliegend auch mehrspurige Fahrzeuge, wie Quads oder LNM-Fahrzeuge verstanden (LNK - Lean Multi Wheel). Mit Vorteil ermöglicht der Verstellhalter für unterschiedlich große Fahrer und/oder für verschiedene Lichteinstrahlung eine schnelle und effektive Anpassung des Sichtwinkels auf die Anzeige oder das Instrument etc. Dabei zeichnet sich die Lösung durch ihre Robustheit und einfache Bedienbarkeit, umfassend bevorzugt einen Drehknauf als Verstellmittel, aus. Eine auf Zug beanspruchte Feder kann die Verstellung mit Vorteil unterstützen. Weitere Vorteile und Merkmale ergeben sich aus der nachfolgenden Beschreibung einer Ausführungsform eines Verstellhalters mit Bezug auf die beigefügten Figuren.

Es zeigen:
- Fig. 1:: eine schematische Ansicht eines Verstellhalters in einer Draufsicht;
- Fig. 2:: eine weitere schematische Ansicht des in der Fig. 1 skizzierten Verstellhalters in einer Seitenansicht;
- Fig. 3:: den aus der Fig. 2 bekannten Verstellhalter, dargestellt in einer weiteren Position.

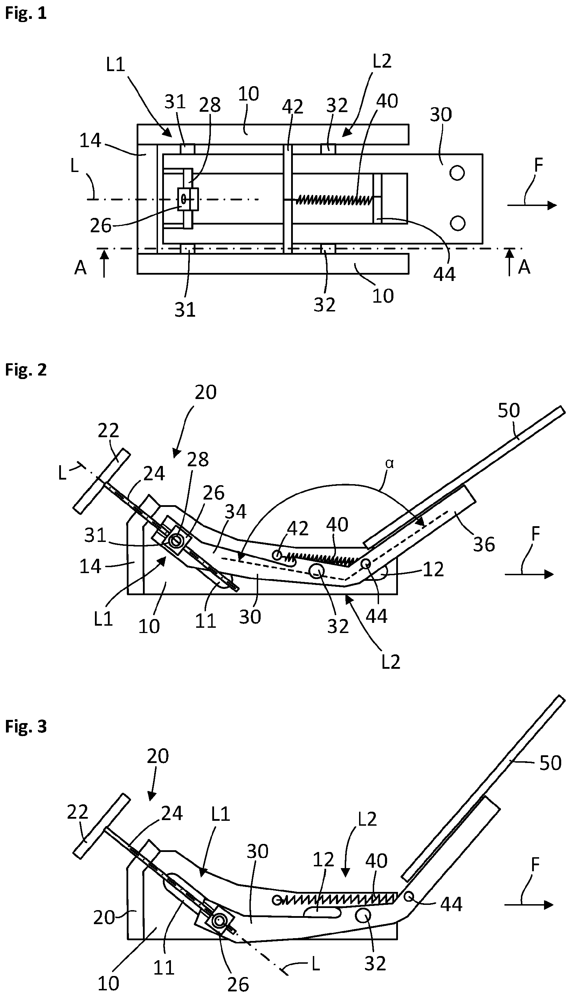

**Fig. 1** zeigt in einer schematischen Ansicht einen Verstellhalter, umfassend einen Instrumentenhalter 30, welcher seitlich in zwei Lagerelementen 10 gelagert ist. Der besseren Orientierung wegen ist mit dem Pfeil F eine Fahrtrichtung (eines hier nicht gezeigten Fahrzeugs) im Einbauzustand des Verstellhalters skizziert. Der Instrumentenhalter 30 dient der Anordnung eines Instruments, bevorzugt insbesondere eines Kombiinstruments, welches in der Fig. 1 nicht dargestellt ist. Die Lagerelemente 10 sind in dieser Ausführungsform über ein Zwischenelement 14 verbunden. Der Instrumentenhalter 30 ist über eine erste Lagerstelle L1 und eine zweite Lagerstelle L2 in den Lagerelementen 10 gelagert. Der Instrumentenhalter 30 umfasst in dieser Ausführungsform zwei erste Eingriffsabschnitte 31 sowie zwei zweite Eingriffsabschnitte 32, wobei diese in nicht erkennbare Ausnehmungen, vorliegend ausgebildet in den jeweiligen Lagerelementen 10, eingreifen. Zwischen den Lagerelementen 10 ist ein zweites Halteelement 42 angeordnet. Der Instrumentenhalter 30 weist ein drittes Halteelement 44 auf. Zwischen dem dritten Halteelement 44 und dem zweiten Halteelement 42 ist ein Federelement 40 angeordnet. Beim Bewegen des Instrumentenhalters 30 nach rechts, also in Fahrtrichtung, wird das Federelement 40 gemäß dieser Ausführungsform auf Zug beansprucht. Entsprechend unterstützt das Federelement 40 eine Bewegung des Instrumentenhalters zurück, vorliegend also nach links. Eine Verstellkraft in dem Instrumentenhalter 30 wird vorliegend mittelbar über ein Übertragungselement 26 sowie ein erstes Halteelement 28 in den Instrumentenhalter 30 eingeleitet. Zur weiteren Beschreibung wird auf die Figuren 2 und 3 verwiesen, in welchen der Schnitt A-A dargestellt ist.

Die **Fig. 2** zeigt den in der Fig. 1 skizzierten Schnitt A-A, wobei in der Fig. 2 zusätzliche Merkmale dargestellt sind. So ist an dem Instrumentenhalter 10 ein Instrument 50 angeordnet. Des Weiteren ist eine Betätigungseinrichtung 20 dargestellt, welche ein Betätigungselement 24 aufweist, welches mit dem Übertragungselement 26 in Wirkverbindung steht. Bei dem Betätigungselement 24 handelt es sich gemäß einer bevorzugten Ausführungsform um eine Gewindespindel bzw. um ein längliches oder stabförmiges Element, welches eine Gewindespindel oder ein Gewinde umfasst. Zur Betätigung des Betätigungselements ist zweckmäßigerweise ein Griff, insbesondere ein Drehgriff 22, vorgesehen. Das Betätigungselement 24 ist zweckmäßigerweise drehbar in dem Zwischenelement 14 gelagert, wobei es hierbei entlang der Längsachse L insbesondere auch lagefixiert ist. Beim Drehen des Betätigungselements 24, wobei die Längsachse L hierbei die Drehachse darstellt, wird das Übertragungselement 26 entlang der Längsachse L, abhängig von der Drehrichtung, entlang der Längsachse L verfahren. Da das Übertragungselement 26 in dem Instrumentenhalter 30 gelagert ist, wird hierdurch eine Verstellkraft auf den Instrumentenhalter übertragen, welche dessen Bewegung bewirkt. Das Übertragungselement 26 ist über ein erstes Halteelement 28 in dem Instrumentenhalter 30 gelagert, wobei hierbei das Übertragungselement 26 drehbar am ersten Halteelement 28 gelagert sein kann oder das erste Halteelement 28 drehbar im Instrumentenhalter 30. Erwähnt sei an dieser Stelle, dass in dem Schnitt A-A das erste Halteelement 28 eigentlich nicht zu sehen wäre. Durch die gewählte Darstellung wird aber deutlich, dass das erste Halteelement 28 und die ersten Eingriffsabschnitte 31 konzentrisch zueinander angeordnet sind bzw. auf einer Achse liegen. Ähnliches gilt für das dritte Halteelement 44. Zu erkennen ist, dass die Eingriffsabschnitte 31 und 32 einen runden, insbesondere kreisrunden, Querschnitt aufweisen. Durch den Instrumentenhalter 30 verdeckt sind ansatzweise eine erste Ausnehmung 11 sowie eine zweite Ausnehmung 12 zu erkennen. Die erste Ausnehmung 11, welche als eine Art Langloch ausgebildet ist, erstreckt sich entlang der Längsachse L. Die zweite Ausnehmung 12 ist hierzu unterschiedlich positioniert. Wird über die Betätigungseinrichtung 20 eine Verstellkraft entlang der Längsachse L auf den Instrumentenhalter 30 aufgebracht, bewegt sich dieser sowohl translatorisch als auch rotatorisch. Je nach Ausgestaltung und Orientierung der Ausnehmungen 11, 12 können verschiedenste Bewegungsmuster realisiert werden. Der Instrumentenhalter 30 umfasst einen ersten Bereich 34 sowie einen zweiten Bereich 36, wobei diese in einem Winkel α zueinander geneigt sind. Der Winkel liegt gemäß bevorzugter Ausführungsformen beispielsweise in einem Bereich von etwa 110° bis 150°. Das Verfahren des Instrumentenhalters 30 nach links wird zweckmäßigerweise durch das Federelement 40, welches hier als Zugfeder wirkt, unterstützt.

**Fig. 3** zeigt die aus der Fig. 2 bekannte Ansicht, wobei der Instrumentenhalter nun in eine unterschiedliche Position verfahren ist. Zu erkennen ist, dass sich das Übertragungselement 26 entlang der Längsachse L bewegt hat. Das Federelement 40 ist entsprechend gegenüber der in der Fig. 2 dargestellten Position deutlich gespannt. Das Instrument 50 ist deutlich mehr zu einem Fahrer hin geneigt. Zu erkennen ist in dieser Ansicht, dass sich die erste Ausnehmung 11, welche als längliche Ausnehmung oder als Langloch in dem entsprechenden Lagerelement 10 ausgebildet ist, entlang der Längsachse L erstreckt. Im Übrigen sind die Merkmale aus den vorherigen Figuren bekannt.

In den hier dargestellten Skizzen weist die Fahrtrichtung eines hier nicht dargestellten Fahrzeugs nach rechts. Der Fahrer ist entsprechend links von dem skizzierten Verstellhalter positioniert. Anders als konventionelle Drehgelenke bietet die verschiebliche Lagerung des Instrumentenhalters in derartigen Ausnehmungen oder Schienen bei minimalem konstruktiven Aufwand eine hohe Flexibilität hinsichtlich des eingestellten Bewegungsprofils des Instrumentenhalters, bei gleichzeitig geringem Platz- oder Bauraumbedarf.

### Bezugszeichenliste

- 10: Lagerelement
- 11: erste Ausnehmung
- 12: zweite Ausnehmung
- 14: Zwischenelement
- 20: Betätigungseinrichtung
- 22: Griff
- 24: Betätigungselement
- 26: Übertragungselement
- 28: erstes Halteelement
- 30: Instrumentenhalter
- 31: erster Eingriffsabschnitt
- 32: zweiter Eingriffsabschnitt
- 34: erster Bereich
- 36: zweiter Bereich
- 40: Federelement
- 42: zweites Halteelement
- 44: drittes Halteelement
- 50: Instrument
- L1: erste Lagerstelle
- L2: zweite Lagerstelle
- L: Längsachse
- α: Winkel
- A-A: Schnitt
- F: Fahrtrichtung

## Patentansprüche

1. Verstellhalter für ein Kombiinstrument eines Kraftrads,
umfassend eine Betätigungseinrichtung (20) sowie einen Instrumentenhalter (30),
wobei die Betätigungseinrichtung (20) ausgelegt ist, eine entlang einer Längsachse (L) gerichtete Verstellkraft auf den Instrumentenhalter (30) aufzubringen, wodurch der Instrumentenhalter (30) bewegt werden kann, und
wobei der Instrumentenhalter (30) derart verschieblich gelagert ist, dass er beim Bewegen neben einer Translationsbewegung eine Rotationsbewegung durchführt.

2. Verstellhalter nach Anspruch 1,
wobei die Betätigungseinrichtung (20) ein Betätigungselement (24) und ein in dem Instrumentenhalter (30) angeordnetes Übertragungselement (26) aufweist,
wobei das Betätigungselement (24) entlang der Längsachse (L) lagefixiert und um die Längsachse (L) drehbar gelagert ist, und
wobei das Übertragungselement (26) und das Betätigungselement (24) derart zusammenwirken, dass eine Drehbewegung des Betätigungselements (24) in eine entlang der Längsachse (L) gerichtete Linearbewegung des Übertragungselements (26) zum Aufbringen der Verstellkraft umgewandelt werden kann.

3. Verstellhalter nach Anspruch 2,
wobei das Betätigungselement (24) ein Gewinde oder eine Gewindespindel umfasst.

4. Verstellhalter nach einem der vorhergehenden Ansprüche,
wobei der Instrumentenhalter (30) über zwei Lagerstellen (L1, L2) gelagert ist, und
wobei die Lagerstellen (L1, L2) durch Eingriffsabschnitte (31, 32) gebildet sind, welche verschieblich in entsprechend ausgebildeten Ausnehmungen (11, 12) gelagert sind.

5. Verstellhalter nach Anspruch 4,
wobei eine erste Lagerstelle (L1) zwei entlang der Längsachse (L) orientierte erste Ausnehmungen (11) aufweist, und
wobei eine zweite Lagerstelle (L2) zwei zweite Ausnehmungen (12) aufweist, welche unterschiedlich dazu orientiert sind.

6. Verstellhalter nach einem der Ansprüche 4 bis 5,
wobei der Instrumentenhalter (30) in seitlich angeordneten Lagerelementen (10) gelagert ist, und
wobei die Lagerelemente (10) die Ausnehmungen (11, 12) aufweisen.

7. Verstellhalter nach einem der vorhergehenden Ansprüche,
umfassend ein Federelement (40), welches derart am Instrumentenhalter (30) angeordnet ist, dass ein Bewegen des Instrumentenhalters (30) unterstützt werden kann.

8. Verstellhalter nach einem der vorhergehenden Ansprüche,
wobei der Instrumentenhalter (30) einen ersten Bereich (34) und einen zweiten Bereich (36) aufweist, welche in einem Winkel (α) zueinander angeordnet sind, und
wobei der zweite Bereich (36) zum Halten des Instruments (50) ausgelegt ist.

9. Kraftfahrzeug, insbesondere Kraftrad,
umfassend einen Verstellhalter nach einem der vorhergehenden Ansprüche.

## Claims

1. Adjustment holder for a combination instrument of a motorcycle,
comprising an actuating device (20) and an instrument holder (30),
wherein the actuating device (20) is designed to apply an adjustment force directed along a longitudinal axis (L) to the instrument holder (30), whereby the instrument holder (30) can be moved, and
wherein the instrument holder (30) is slidably mounted such that, when moving, it performs a rotational movement in addition to a translational movement.

2. Adjustment holder according to claim 1,
wherein the actuating device (20) comprises an actuating element (24) and a transmission element (26) arranged in the instrument holder (30),
wherein the actuating element (24) is fixed in position along the longitudinal axis (L) and rotatably mounted about the longitudinal axis (L), and
wherein the transmission element (26) and the actuating element (24) cooperate in such a way that a rotational movement of the actuating element (24) can be converted into a linear movement of the transmission element (26) directed along the longitudinal axis (L) for applying the adjustment force.

3. Adjustment holder according to claim 2,
wherein the actuating element (24) comprises a thread or a threaded spindle.

4. Adjustment holder according to any one of the preceding claims,
wherein the instrument holder (30) is mounted via two bearing points (L1, L2), and
wherein the bearing points (L1, L2) are formed by engagement sections (31, 32) which are slidably mounted in correspondingly configured recesses (11, 12).

5. Adjustment holder according to claim 4,
wherein a first bearing point (L1) comprises two first recesses (11) oriented along the longitudinal axis (L), and
wherein a second bearing point (L2) comprises two second recesses (12) which are oriented differently thereto.

6. Adjustment holder according to any one of claims 4 to 5,
wherein the instrument holder (30) is mounted in laterally arranged bearing elements (10), and
wherein the bearing elements (10) comprise the recesses (11, 12).

7. Adjustment holder according to any one of the preceding claims,
comprising a spring element (40) which is arranged on the instrument holder (30) in such a way that a movement of the instrument holder (30) can be assisted.

8. Adjustment holder according to any one of the preceding claims,
wherein the instrument holder (30) comprises a first region (34) and a second region (36) which are arranged at an angle (α) to one another, and
wherein the second region (36) is designed for holding the instrument (50).

9. Motor vehicle, in particular motorcycle,
comprising an adjustment holder according to any one of the preceding claims.

## Revendications

1. Support de réglage pour un instrument combiné d'une motocyclette,
comprenant un dispositif d'actionnement (20) ainsi qu'un support d'instrument (30),
dans lequel le dispositif d'actionnement (20) est conçu pour appliquer une force de réglage dirigée le long d'un axe longitudinal (L) sur le support d'instrument (30), grâce à quoi le support d'instrument (30) peut être déplacé, et
dans lequel le support d'instrument (30) est monté de manière coulissante de telle sorte qu'il effectue, lors du déplacement, un mouvement de rotation en plus d'un mouvement de translation.

2. Support de réglage selon la revendication 1,
dans lequel le dispositif d'actionnement (20) comprend un élément d'actionnement (24) et un élément de transmission (26) disposé dans le support d'instrument (30),
dans lequel l'élément d'actionnement (24) est fixé en position le long de l'axe longitudinal (L) et monté de manière rotative autour de l'axe longitudinal (L), et
dans lequel l'élément de transmission (26) et l'élément d'actionnement (24) coopèrent de telle sorte qu'un mouvement de rotation de l'élément d'actionnement (24) peut être converti en un mouvement linéaire de l'élément de transmission (26) dirigé le long de l'axe longitudinal (L) pour appliquer la force de réglage.

3. Support de réglage selon la revendication 2,
dans lequel l'élément d'actionnement (24) comprend un filetage ou une tige filetée.

4. Support de réglage selon l'une des revendications précédentes,
dans lequel le support d'instrument (30) est monté par l'intermédiaire de deux points de palier (L1, L2), et
dans lequel les points de palier (L1, L2) sont formés par des sections d'engagement (31, 32) qui sont montées de manière coulissante dans des évidements (11, 12) configurés de manière correspondante.

5. Support de réglage selon la revendication 4,
dans lequel un premier point de palier (L1) comprend deux premiers évidements (11) orientés le long de l'axe longitudinal (L), et
dans lequel un deuxième point de palier (L2) comprend deux deuxièmes évidements (12) qui sont orientés différemment par rapport à celui-ci.

6. Support de réglage selon l'une des revendications 4 à 5,
dans lequel le support d'instrument (30) est monté dans des éléments de palier (10) disposés latéralement, et
dans lequel les éléments de palier (10) comprennent les évidements (11, 12).

7. Support de réglage selon l'une des revendications précédentes,
comprenant un élément de ressort (40) qui est disposé sur le support d'instrument (30) de telle sorte qu'un déplacement du support d'instrument (30) peut être assisté.

8. Support de réglage selon l'une des revendications précédentes,
dans lequel le support d'instrument (30) comprend une première région (34) et une deuxième région (36) qui sont disposées à un angle (α) l'une par rapport à l'autre, et
dans lequel la deuxième région (36) est conçue pour maintenir l'instrument (50).

9. Véhicule automobile, en particulier motocyclette,
comprenant un support de réglage selon l'une des revendications précédentes.
